# FASCICULE DE BREVET EUROPEEN

(11) **EP 1 689 128 B1**
(45) Date de publication et mention de la délivrance du brevet: **23.04.2014**
(21) Numéro de dépôt: 06101171.4
(22) Date de dépôt: 01.02.2006
(51) Int. Cl.: H04L 12/28, H02J 3/14, H02J 13/00

(54) **Dispositif et procédé de démarrage d'un cycle d'un appareil électrique**
Verfahren und Vorrichtung zum Anfahren eines Vorgangs eines Gerätes
Device and method of starting a cycle of an electrical apparatus

(30) Priorité: 02.02.2005 FR 0501170
(43) Date de publication de la demande: 09.08.2006
(73) Titulaire: FagorBrandt SAS, 92500 Rueil Malmaison (FR)
(72) Inventeur: Barjolin, Nicolas, 85440 Talmont-Saint-Hilaire (FR); Clement, Jean-Francis, 85000 La Roche-sur-Yon (FR); Gondras, Victor Emmanuel, 69007 Lyon (FR); Ricordel, Eloi, 85002 La Roche-sur-Yon (FR)

(56) Documents cités:
- EP-A- 1 372 238
- US-A- 5 086 385
- US-A- 5 796 604

## Description

La présente invention concerne un dispositif de démarrage d'un cycle d'un appareil électrique relié par un moyen de connexion à un réseau électrique.

Elle concerne également un appareil électroménager relié par un moyen de connexion à un réseau électrique conforme à l'invention.

Elle concerne aussi un procédé de démarrage d'un cycle d'un appareil électroménager relié par un moyen de connexion à un réseau électrique.

De manière générale, cette invention concerne les appareils électriques équipés d'un système d'analyse du réseau électrique. Généralement, ces dispositifs sont à l'extérieur de l'appareil électrique tels que des programmateurs et nécessitent leur réglage soit par les plages horaires, soit par le code tarifaire du fournisseur d'électricité.

Plus particulièrement, la présente invention concerne des appareils électriques domestiques du type appareil de lavage, et notamment lave-vaisselle, sèche-linge ou lave-linge ou encore four de cuisson. Ce domaine d'application n'est bien entendu pas limitatif.

Lorsque l'utilisateur veut mettre en fonctionnement un appareil électrique pendant la plage horaire où le tarif est le plus avantageux, il est nécessaire de connaître cette période.

En particulier, au moment de l'abonnement à un contrat de fourniture d'électricité, il est possible de prendre un abonnement à double tarification. Par exemple, ce type de contrat proposé par E.D.F. en France permet de répartir au mieux la consommation des clients sur l'ensemble de la journée. En période dite creuse, le coût au kWh est plus avantageux pour le consommateur. Huit heures creuses quotidiennes sont déterminées par E.D.F. et peuvent être différentes d'un client à l'autre, et modifiées unilatéralement par E.D.F. après en avoir informé ses clients.

Les compteurs électriques basculent automatiquement entre les deux tarifs après réception d'un ordre émis électriquement par E.D.F. sur le réseau secteur. Différents ordres sont utilisés sur le réseau pour permettre le choix aux consommateurs entre différentes plages horaires creuses et mieux répartir encore les périodes de forte consommation électrique. Une paire d'ordres (« Heures Creuses » / « Heures Pleines ») constituent alors un codage : il en existe cinq à l'heure actuelle pour les réseaux « Basse Tension » (« A », « C », « D », « E » et « Y »). À chaque modification d'un ordre, les ordres des quatre autres codages sont répétés au sein d'une « trame » de données émise par E.D.F.

Ainsi, pour démarrer automatiquement le cycle d'un appareil électroménager dans une période dite creuse, il est nécessaire de :
- soit démarrer à un instant précis que l'on sait en période dite creuse grâce à une horloge de référence juste, cet instant devant être connu et réglé au préalable.
- soit démarrer après réception de l'ordre envoyé par E.D.F. aux compteurs électriques, son codage (« A », « C », « D », « E » ou « Y ») devant être connu et réglé au préalable.

Les fonctions équipant de tels appareils électriques pour démarrer le cycle pendant la plage horaire au tarif le plus avantageux peuvent être classées en trois catégories : le départ instantané, le départ différé sans gestion de l'heure et le départ différé avec gestion de l'heure.

Le départ instantané nécessite à l'utilisateur d'intervenir directement sur l'appareil à l'instant voulu durant la plage horaire où le tarif est le plus avantageux. Cette plage horaire se situe généralement en pleine nuit.

Le départ différé sans gestion de l'heure nécessite de calculer le temps à décompter avant le démarrage du cycle et de le sélectionner.

Le départ différé avec gestion de l'heure nécessite de régler une heure de départ ou de fin de cycle sur l'appareil et de maintenir l'appareil à l'heure juste. Un système de mise à l'heure automatique est disponible sur certains appareils mais un surcoût est généré par celui-ci.

Ces fonctions proposées sur les appareils électriques sont contraignantes pour l'utilisateur car il est obligé de connaître les périodes de tarification les plus avantageuses et de mettre en marche ses appareils pendant ces plages horaires ou effectuer systématiquement une programmation.

De plus, en cas de coupure de l'alimentation électrique, l'information horaire donnée par l'horloge de l'appareil est perdue de telle sorte qu'il est nécessaire de remettre à jour l'heure au niveau de chaque appareil électrique et de synchroniser cette mise à jour.

Le démarrage du cycle d'un appareil électrique peut aussi être déclenché par un dispositif externe à l'appareil. Ces systèmes complémentaires non intégrés à l'appareil peuvent être classés en deux catégories : les programmateurs et les dispositifs exploitant le signal dérivé du compteur électrique de l'habitation.

Les programmateurs sont des dispositifs extérieurs à l'appareil et nécessitent un réglage suivant des plages horaires ou encore selon un code tarifaire délivré par le fournisseur d'électricité.

Les dispositifs d'exploitation du signal de commande issu du compteur électrique nécessitent une installation électrique du domicile spécifique faite par un spécialiste des installations électriques.

On connaît également un système, décrit dans le document US-A-5796604, comprenant une machine de communication et une pluralité de dispositifs distribués sur un moyen de transmission d'information. La machine de communication comprend des moyens de réception d'éléments d'information qui sont présents dans un réseau de distribution de puissance électrique et ces éléments d'information représentent un changement dans le système de fixation de prix. Cette machine de communication a aussi des moyens pour transcrire les éléments d'information sur le changement du système de fixation de prix dans des éléments d'information formatés selon un protocole d'échange. Et ladite machine a des moyens pour envoyer ces éléments d'information formatés sur le moyen de transmission d'information, les dispositifs étant capable de recevoir ces éléments d'information formatés.

Cependant, ce système présente l'inconvénient de ne pas démarrer un appareil électrique au cours d'une plage horaire la plus avantageuse en fonction des changements de tarification des plages horaires d'un réseau électrique.

On connaît également un système, décrit dans le document EP-A-1372238, qui facilite et implémente des décisions d'économie d'énergie par le propriétaire d'une maison. Le système augmentera l'énergie et l'efficacité de coût d'un réseau d'alimentation en énergie en fournissant un mécanisme pour réduire le pic d'une demande d'énergie. Un contrôleur dans une communication logique avec des appareils de consommation d'énergie répond aux besoins en énergie desdits appareils en permettant ou en réduisant l'alimentation en énergie desdits appareils basée sur une évaluation d'une pluralité de considérations logiques.

Cependant, ce système présente l'inconvénient de ne pas démarrer un appareil électrique au cours d'une plage horaire la plus avantageuse en fonction des changements de tarification des plages horaires d'un réseau électrique.

La présente invention a pour but de résoudre les inconvénients précités et de proposer un dispositif de démarrage d'un cycle d'un appareil électrique relié par un moyen de connexion à un réseau électrique, permettant de gérer au mieux les plages horaires au tarif le plus avantageux.

A cet effet, l'invention vise un procédé de démarrage d'un cycle d'un appareil électroménager relié par un moyen de connexion à un réseau électrique, ledit réseau électrique proposant un abonnement avec des changements de tarification en fonction des plages horaires, ledit appareil électrique comprenant un moyen d'exploitation du signal de codage des tarifications en fonction des plages horaires sur un réseau électrique et un moyen de commande dudit appareil électroménager.

Ce procédé de démarrage d'un cycle d'un appareil électroménager relié par un moyen de connexion à un réseau électrique comprend les étapes suivantes :
- réception du signal de codage de chaque tarification ;
- décodage du signal de codage de chaque tarification ;
- identification de la plage horaire commune à toutes les tarifications correspondant au tarif le plus avantageux pour déclancher le démarrage du cycle de l'appareil électrique dans cette plage horaire.

Ce procédé de démarrage d'un cycle d'un appareil électroménager permet ainsi pendant le fonctionnement sous tension dudit appareil électrique, de déterminer une plage horaire commune à la tarification la plus avantageuse à partir des signaux de codage de chaque tarification émis par le fournisseur d'électricité.

L'invention concerne aussi un dispositif de démarrage d'un cycle d'un appareil électrique adapté à mettre en oeuvre un procédé de démarrage d'un cycle d'un appareil électrique conforme à l'invention, selon la revendication 11.

Ledit dispositif comprend un moyen d'exploitation pour décoder le signal de codage de chaque tarification et identifier au moins une plage horaire commune à toutes les tarifications correspondant au tarif le plus avantageux pour déclencher le démarrage du cycle de l'appareil électrique dans cette plage horaire.

Ce dispositif de démarrage d'un cycle d'un appareil électrique permet ainsi pendant le fonctionnement sous tension dudit appareil électrique, de bénéficier de la tarification la plus avantageuse lors de l'utilisation d'un appareil électrique par une action simple et sans contrainte pour l'utilisateur ayant souscrit un abonnement auprès d'un fournisseur d'électricité avec des changements de tarification en fonction des plages horaires.

En particulier, le dispositif rend le départ de cycle, pendant la plage horaire à la tarification la plus avantageuse, le plus accessible et le plus simple possible sans l'adjonction d'un dispositif externe à l'appareil ni réglage.

Selon un mode de réalisation de l'invention, le démarrage du cycle est déclenché automatiquement.

Le démarrage du cycle de l'appareil électrique peut ainsi être déclenché automatiquement à partir des informations récupérées par le moyen d'exploitation, de telle sorte que l'utilisateur n'ait aucune intervention à effectuer sur l'appareil électrique.

Ainsi, pendant le fonctionnement sous tension de l'appareil électrique, le moyen d'exploitation prend en compte les codages émis par le fournisseur d'électricité et sélectionne la plage horaire commune à toutes les tarifications correspondant au tarif le plus avantageux pour déclencher le démarrage du cycle de l'appareil électrique dans cette plage horaire.

Ces informations du moyen d'exploitation étant maintenues à jour lorsque l'appareil électrique est sous tension par la surveillance en continu de chaque signal de codage envoyé sur le réseau électrique, de telle sorte qu'au prochain démarrage du cycle de l'appareil électrique, le déclenchement de l'appareil électrique s'effectue pendant la

plage horaire où la tarification est la plus avantageuse.

Selon une autre caractéristique préférée de l'invention, la plage horaire commune est mise à disposition pour le démarrage du cycle suivant.

Cette mémorisation de la plage horaire commune de la tarification la plus avantageuse permet à l'utilisateur de déclencher un démarrage du cycle de l'appareil électrique en départ différé à l'instant voulu, ou encore après une coupure de l'alimentation électrique de l'appareil et sa remise en tension, de conserver une plage horaire commune avec la tarification la plus avantageuse pour le départ d'un nouveau démarrage du cycle de l'appareil électrique.

Selon une caractéristique avantageuse de l'invention, le moyen d'exploitation du signal de codage est intégré à l'appareil électrique.

Il est ainsi possible d'utiliser l'appareil électrique sans faire appel à un spécialiste des installations électriques pour déclencher le démarrage d'un cycle dans la plage horaire commune à tous les codages où la tarification est la plus avantageuse, ou encore en raccordant l'appareil électrique à un dispositif extérieur avec les risques de compatibilité et d'erreur de branchement possibles.

Selon un autre mode de réalisation, le moyen d'exploitation du signal de codage vérifie le basculement pour chaque codage d'une tarification à au moins une autre dite tarification sur une période prédéterminée.

Cette vérification du basculement pour chaque codage d'une tarification à au moins une autre dite tarification sur une période prédéterminée permet de s'assurer que tous les codages envoyés par le fournisseur d'électricité possèdent une tarification plus avantageuse dans une plage horaire donnée.

De préférence, le moyen d'exploitation ne tient compte que des codages avec modification de tarification sur ladite période prédéterminée.

Après l'analyse des codages envoyés par le fournisseur d'électricité, le moyen d'exploitation détermine la plage horaire commune à la tarification la plus avantageuse en ne tenant compte que des codages ayant des changements de tarification. Sinon, aucune plage horaire commune à un tarif préférentiel ne peut être sélectionné pour le déclenchement d'un démarrage du cycle de l'appareil électrique.

L'invention concerne aussi un appareil électroménager adapté à mettre en oeuvre le procédé de démarrage d'un cycle d'un appareil électrique selon l'invention, conforme à la revendication 23.

Un tel appareil électroménager présente les mêmes caractéristiques et avantages analogues à ceux décrits précédemment.

D'autres particularités et avantages de l'invention apparaîtront encore dans la description ci-après.

Aux dessins annexés, donnés à titre d'exemples non limitatif :
- la figure 1 est un schéma bloc illustrant un appareil électrique conforme à l'invention ;
- la figure 2 est un montage électrique d'un filtre analogique d'entrée ;
- la figure 3 est un diagramme illustrant une trame d'un code de changement de tarification ;
- la figure 4 est un algorithme illustrant le procédé de démarrage d'un cycle d'un appareil électroménager conforme à un mode de réalisation de l'invention ;
- la figure 5 est un graphique illustrant la plage horaire commune à la tarification la plus avantageuse de plusieurs codes pour un réseau d'alimentation électrique d'un appareil ;
- la figure 6 est une représentation schématique d'un bandeau de commande d'un appareil électroménager conforme à l'invention ;
- la figure 7 est un algorithme illustrant le procédé de validation du type de départ d'un appareil électroménager conforme à un mode de réalisation de l'invention.

On va décrire tout d'abord un appareil électrique 1 adapté à mettre en oeuvre le procédé de démarrage d'un cycle dudit appareil électrique 1.

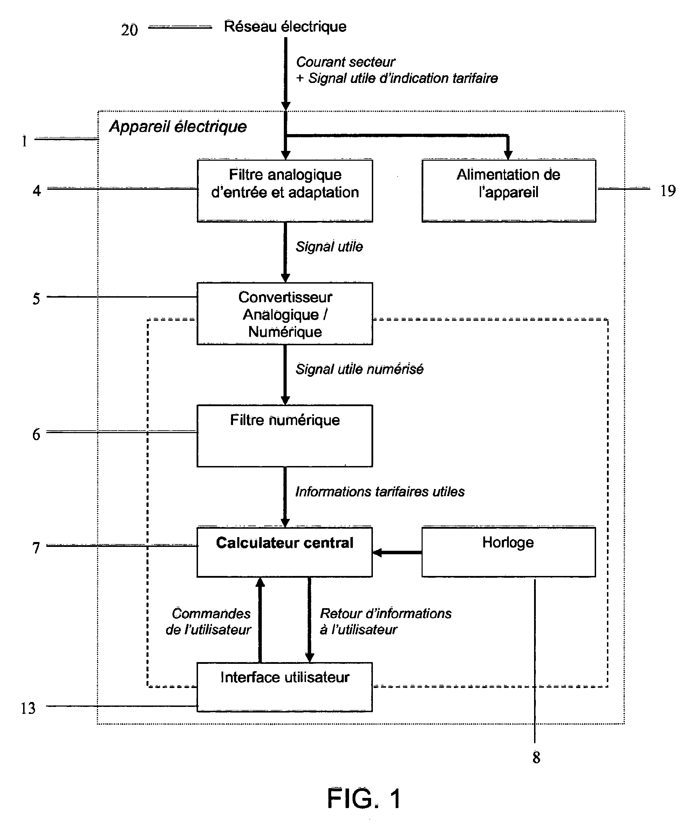

Cet appareil électrique 1 est illustré schématiquement sur la figure 1.

Seuls les éléments fonctionnels de cet appareil 1 qui permettent la mise en oeuvre du démarrage d'un cycle ont été illustrés, l'ensemble des éléments et organes propres à l'appareil électrique 1 n'étant pas représentés.

Cet appareil électrique 1 peut notamment être un lave-vaisselle ou encore un lave-linge. Il peut également être un four de cuisson domestique.

Le démarrage du cycle de l'appareil 1 correspond au démarrage de la fonctionnalité pour laquelle l'appareil 1 est destiné.

L'appareil électrique 1 est relié par un moyen de connexion 19 à un réseau électrique 20.

Il comporte un moyen d'exploitation 2 du signal de codage des tarifications en fonction des plages horaires sur un réseau électrique 20 et un moyen de commande 3 de l'appareil 1.

Le moyen d'exploitation 2 du signal de codage des tarifications en fonction des plages horaires est un circuit électronique. Ce circuit électronique comprend un filtre analogique d'entrée 4, un convertisseur analogique / numérique 5, un filtre numérique 6 et un calculateur central 7. Ce moyen d'exploitation 2 du signal de codage est intégré à l'appareil électrique 1.

Le calculateur central 7 comprend une horloge 8 à base de temps externe.

L'horloge 8 à base de temps externe est une horloge synchronisée sur le réseau électrique 20, et notamment par l'information de passage à zéro de la tension du secteur. Ce type de synchronisation est couramment appelé synchronisation secteur.

Cette horloge 8 à base de temps externe comprend une mémoire vive (RAM ou Random Access Memory) adaptée à mémoriser l'information horaire.

L'incrémentation de l'information horaire de cette horloge 8 à base de temps externe est réalisée au niveau d'un microcontrôleur 9 adapté à analyser la valeur de la tension V délivrée par l'alimentation électrique de l'appareil électrique 1.

Le filtre analogique d'entrée 4 est un moyen d'atténuer le courant du secteur en tension et de le centrer autour d'une valeur de -2,5V. Ce filtre analogique d'entrée 4 comprend un filtre passe haut 10, un pont diviseur 11 et un filtre passe bas 12.

Ce filtre analogique d'entrée 4 constitue ainsi un système de filtrage du signal électrique autour d'une fréquence particulière.

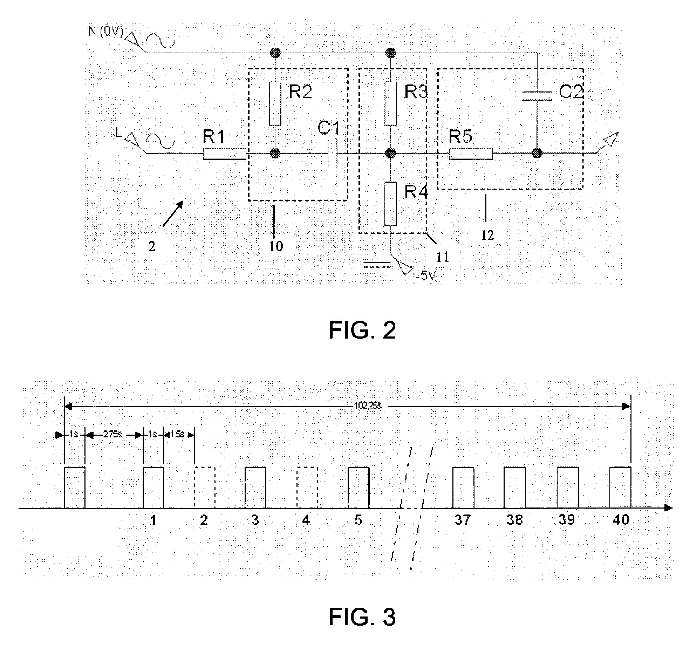

La figure 2 illustre à cet effet un montage électrique permettant de relier la carte électronique comprenant le microcontrôleur 9 à l'alimentation électrique 19 de l'appareil 1. Dans cet exemple de réalisation, une première résistance R1 d'une impédance de 470kΩ sert à atténuer la tension de 230V à 5V, suivie d'un filtre passe haut 10 comprenant une résistance R2 d'une impédance de 100kΩ et une capacité d'une impédance de 4,7nF. Ce filtre passe haut 10 est suivi par un pont diviseur 11 comprenant deux résistances R3 et R4 montées en série dont leur impédance est de 56kΩ, pour finir par un filtre passe bas 12 comprenant une résistance R5 d'une impédance de 100kΩ et une capacité d'une impédance de 10nF.

Bien entendu, d'autres méthodes d'obtention d'un signal de codage de changement de tarification pourraient être utilisées.

Le fournisseur d'électricité utilise un système de déclenchement de changement de tarif des compteurs. Ce système repose sur l'injection dans le courant du secteur de signaux selon un code que les récepteurs reconnaissent et qui leur donne l'ordre d'effectuer des commutations.

On a illustré sur la figure 3, un exemple de trame d'un code de changement de tarification. Cette figure montre deux impulsions manquantes, la 2 et la 4.

Ce signal porteur est à 175Hertz. Ledit signal est modulé par des impulsions binaires selon le code suivant : un top de 1 seconde suivi d'un silence de 2,75 secondes indique le début de la trame. Le récepteur reconnaît ce top et recommence à compter le temps à partir de ce moment. La trame comporte quarante emplacements d'impulsions de 2,5 secondes et sa durée totale est de 102,25 secondes. Chaque emplacement d'impulsion de 2,5 secondes se compose d'une durée de 1 seconde pendant laquelle il peut y avoir ou non émission de la composante de 175Hertz et d'un signal de 1,5 seconde servant de séparateur avec l'emplacement suivant. Si le top est présent, il déclenche dans les récepteurs un basculement.

Le filtre passe haut 10 a pour fonction de filtrer la plage de fréquence utile pour récupérer le signal. Le signal émis par le fournisseur d'électricité pour déterminer le passage entre les « heures pleines » et les « heures creuses » s'effectue à une fréquence de l'ordre de 175Hertz.

La fréquence du courant sur le réseau du fournisseur d'électricité est de 50Hertz. Ce filtre passe haut 10 permet d'ignorer les perturbations de l'alimentation électrique afin d'obtenir un signal propre concernant le codage des tarifications « heures pleines » et « heures creuses ».

Le pont diviseur 11 a pour fonction de centrer la tension appliquée sur les organes à la sortie du filtre analogique d'entrée 4. Cette tension est de l'ordre de -2,5V.

Le filtre passe bas 12 permet de réduire le bruit en filtrant le signal à une fréquence inférieure à 175Hertz.

Ce filtre analogique d'entrée 4 permet d'atténuer la composante du signal à la fréquence de 50Hertz par rapport à la composante du signal à la fréquence de 175Hertz. Cette atténuation est de l'ordre de 6dB.

En outre, la composante du signal a 50Hertz est atténuée d'environ 44dB permettant d'éviter de saturer le convertisseur analogique numérique 5.

Les fréquences parasites sont rejetées par les filtres passe haut 10 et passe bas 12. Ces deux filtres passe haut 10 et passe bas 12 constituent un passe bande.

Une interface utilisateur 13 permet d'indiquer la présence d'une plage horaire commune à une tarification avantageuse par des moyens d'affichage.

Le convertisseur 5 permet de transformer le signal sorti du filtre analogique d'entrée 4 en un signal numérisé sous forme d'une trame composée de bits.

Le signal numérisé sorti du convertisseur 5 permet de faire un traitement des informations de manière à supprimer la composante de la tension d'alimentation concernant la fréquence à 50Hertz et de conserver que les informations concernant les codages des changements de tarification émis à une fréquence autour de 175Hertz.

Le signal à la sortie du filtre numérique 6 permet d'obtenir uniquement les informations tarifaires utiles à mettre en entrée du calculateur central 7.

L'appareil électrique 1 comprend également des moyens de mémorisation 14 constitués par exemple d'une mémoire non-volatile 15 (du type EEPROM) qui est adaptée à stocker les informations concernant l'état de la fonction d'un départ différé au tarif le plus avantageux dans la plage horaire commune à tous les codes.

En pratique, ces informations sont adressées par le microcontrôleur 9 à partir de l'état stocké en mémoire 15.

Afin de permettre la mise en oeuvre du procédé de démarrage d'un cycle de l'invention, le microcontrôleur 9 est associé à des moyens logiciels 16 comprenant notamment des moyens de lecture de la plage horaire commune à tous les codages au tarif le plus avantageux mémorisée dans l'horloge 8 et des moyens de mise à zéro de l'information de la plage horaire commune de l'horloge 8 et des moyens de calcul d'une durée de plage horaire commune à partir des informations horaires mémorisées dans la mémoire non-volatile 15 et l'horloge 8.

En outre, les moyens logiciels 16 du microcontrôleur 9 sont adaptés à détecter les codes abandonnés.

Ils comportent également des moyens permettant la mise à jour du format de la trame des codes de changement de tarification.

Bien entendu, la représentation schématique de la figure 2 n'est pas limitative. En particulier, le bus de communication entre les différents éléments peut être différent.

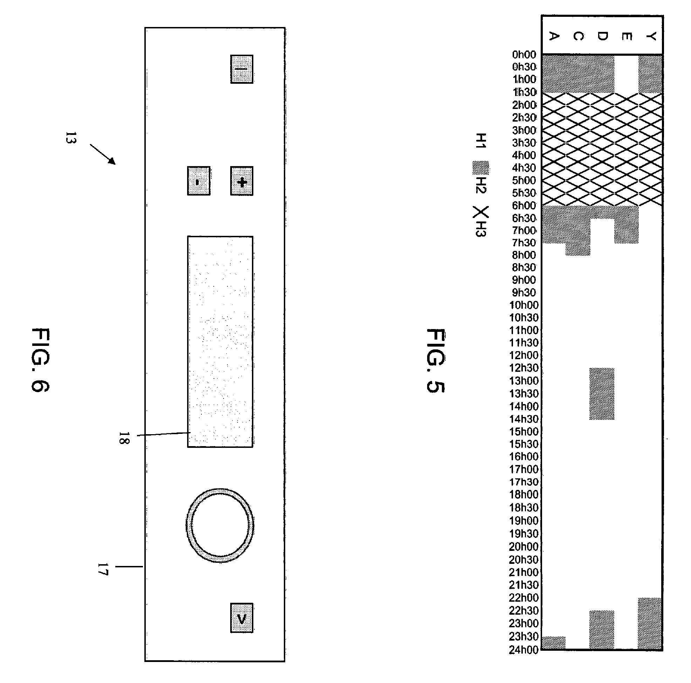

On va décrire à présent en référence à la figure 5 un mode de réalisation du procédé de démarrage d'un cycle d'un appareil électroménager 1 conforme à l'invention.

Ce procédé de démarrage d'un cycle peut être mis en oeuvre dans un appareil 1 tel que décrit précédemment grâce à l'utilisation d'un filtre analogique d'entrée 4, un convertisseur analogique numérique 5, un filtre numérique 6.

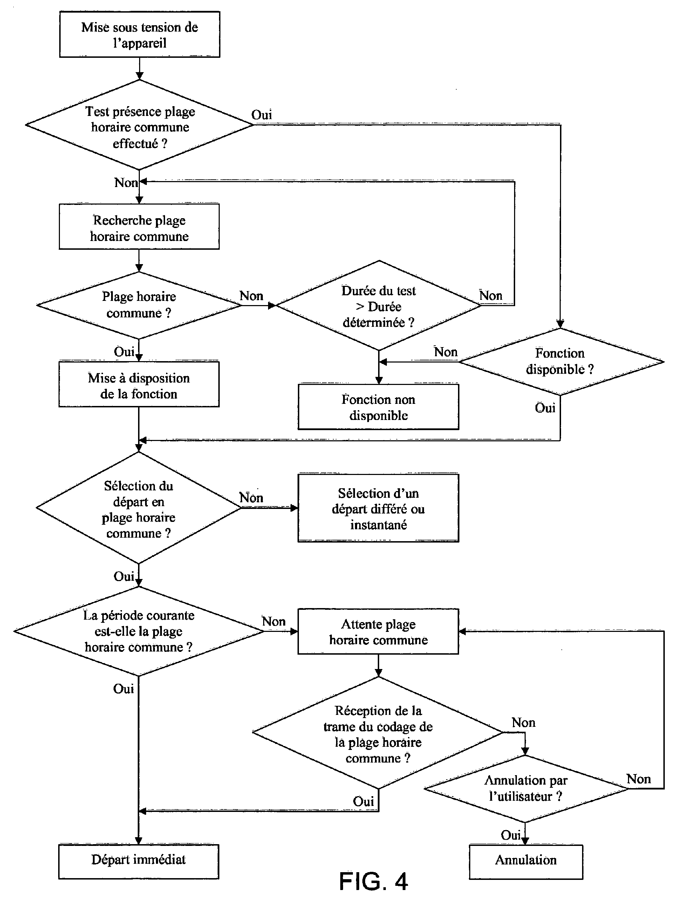

Comme illustré à la figure 4, lorsque l'appareil 1 est mis sous tension pour la première fois, le départ d'un cycle dans une plage horaire commune à tous les codages correspondant au tarif le plus avantageux n'est pas accessible. A cet instant, l'appareil 1 considère que la période d'heures creuses n'est pas connue.

L'utilisateur donne l'information de la recherche de la plage horaire commune en appuyant sur un bouton du bandeau de commande 17 de l'appareil 1. L'appareil 1 doit tester le réseau 20 pour vérifier que cette fonctionnalité est exploitable.

La recherche des codages à la tarification la plus avantageuse est déclenchée.

Un moyen de témoin 18 de recherche de la plage horaire commune à tous les codages peut être mis en fonctionnement pour prévenir l'utilisateur. Ce moyen de témoin 18 peut être un voyant lumineux ou encore un message sur un écran d'affichage.

Le test du réseau électrique 20 a une durée de 25 heures au maximum. Ce test est valide si aucune interruption de l'alimentation de l'appareil 1 n'intervient pendant la période de test.

Si aucune plage horaire commune n'est détectée pendant la période de 25 heures, alors le moyen de témoin 18 est éteint et la fonctionnalité de départ automatique en « heures creuses » ou à la tarification la plus avantageuse reste invalidée. Dans ce cas, l'appareil 1 propose à la place d'un départ dans la plage horaire commune à tous les codages un départ différé classique ou encore un départ instantané.

Cette possibilité de proposer un autre type de départ d'un cycle de l'appareil 1 permet audit appareil 1 de fonctionner avec tous les réseaux électriques 20 grâce à la présence d'un mode dégradé.

En revanche, si une plage horaire commune à tous les codages est détectée, l'indication du test du réseau électrique 20 est éteint et le choix d'un départ automatique en « heures creuses » ou à la tarification la plus avantageuse est rendu possible.

Afin de garantir d'utiliser la plage horaire commune à tous les codages où la tarification est la plus avantageuse, une surveillance du réseau électrique 20 fonctionne en continu de manière à détecter les changements de l'installation électrique.

Pour s'affranchir de tout réglage de l'appareil 1, l'invention se base sur le principe suivant : l'appareil 1 décode tous les codages et démarre le cycle lorsque l'ensemble des codages ont basculé de tarification. Par exemple pour le réseau E.D.F., les cinq codages à double tarif ont basculé des « heures pleines » aux « heures creuses ».

A chaque basculement d'un codage d'une tarification à une autre, une trame est émise par le réseau du fournisseur d'électricité. Ladite trame contient l'ordre correspondant à la nouvelle tarification de ce codage ainsi que les ordres relatifs aux autres codages indiquant leur période tarifaire courante. Lorsque l'appareil 1 reçoit une trame contenant la plage dite « heures creuses » pour tous les codages alors la plage horaire commune à tous les codages est détectée. Ladite trame correspondant à la plage horaire commune est appelée « synchronisation heures creuses ».

Ce principe de fonctionnement est illustré à la figure 5 et permet de visualiser la plage horaire commune pour tous les codages où la tarification est la plus avantageuse.

Les rectangles hachurés symbolisent la plage horaire commune à tous les codages détectés sur le réseau du fournisseur d'électricité où la tarification est la plus avantageuse c'est-à-dire la période d'« heures creuses ». Cette plage horaire est désignée par H3 sur la figure 5. Les plages horaires correspondant aux heures pleines sont désignées par H1 et correspondent aux zones blanches de la figure 5. Et pour finir, les plages horaires correspondant aux heures creuses mais n'étant pas communes à tous les codes du réseau du fournisseur d'électricité sont en gris et désignées par H2.

Lorsqu'une plage horaire commune est disponible, l'utilisateur n'a plus qu'à sélectionner ce type de départ et le valider. A partir de cet instant, l'appareil 1 est prêt à démarrer un cycle dès le passage en période d'« heures creuses » de la plage horaire commune. La plage horaire commune est mise à disposition pour le démarrage du cycle suivant.

De cette manière, aucun réglage de l'appareil 1 n'est à effectuer par l'utilisateur ou l'installateur. Une seule manipulation est nécessaire pour obtenir un départ automatique de l'appareil 1 pendant la plage horaire commune à tous codages où la tarification est la plus avantageuse.

En outre, l'appareil 1 garde en mémoire la période tarifaire en cours. Lors de la validation par l'utilisateur d'un départ pendant la plage horaire commune à tous les codages alors que la période tarifaire courante est déjà ladite plage horaire commune, le cycle de l'appareil 1 démarre instantanément.

De cette façon, l'appareil 1 n'attend pas la prochaine plage horaire commune qui peut avoir lieu que le lendemain.

Dans le cas où un codage est abandonné par le fournisseur d'électricité, la procédure de surveillance s'assure que chaque codage bascule entre au moins deux tarifications dans un sens et dans l'autre sur une période de 24 heures. Les codages qui n'ont pas de changement de tarification durant cette période ne sont pas alors pris en compte.

Un départ instantané est disponible avant la première étape de réception du signal de codage de chaque tarification.

Un départ différé est disponible pendant les étapes de recherche et de sélection de la plage horaire commune à toutes les tarifications. Le départ différé peut être programmé même si le départ dans la plage horaire commune au tarif le plus avantageux est disponible.

La durée du départ différé est ajustable par pas d'incrémentation et de décrémentation.

Le choix du départ différé peut être effectué à partir de touches « + » et « - » et la validation par une touche « départ ».

Les touches « + » et « - » permettent de naviguer dans les réglages disponibles sur l'afficheur de l'appareil 1. Un tel bandeau de commande 17 comprenant les touches de réglage, de validation et l'afficheur est illustré à la figure 6.

Après la sélection d'un programme, l'appareil est prêt pour un départ instantané.

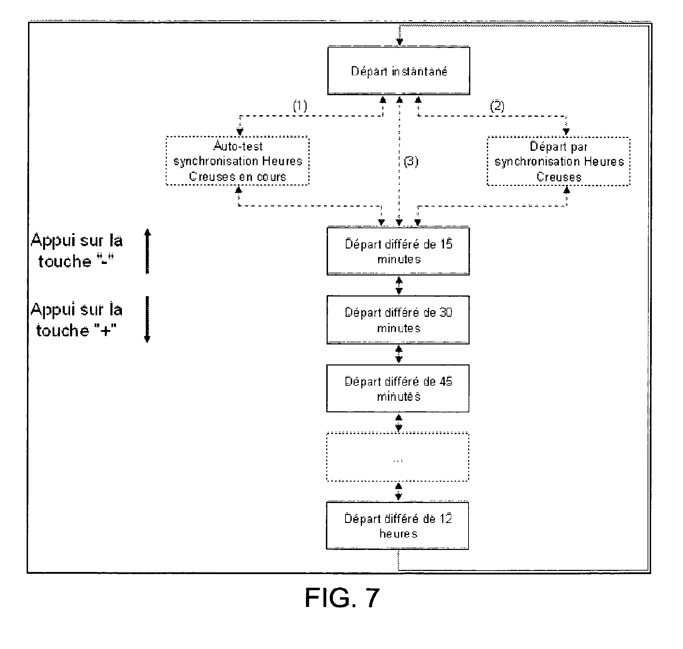

Comme illustré à la figure 7, un procédé de sélection du type de départ permet à l'utilisateur de choisir le moyen de démarrage d'un cycle de l'appareil 1 ainsi que l'instant voulu.

Le premier appui sur la touche « + » provoque :
- (1) l'affichage de l'information « Auto-test synchronisation Heures Creuses en cours » pendant les premières 24 heures de mise en service. Un appui supplémentaire sur la touche « + » sélectionne un départ différé de 15 minutes.
- (2) la sélection du départ différé par synchronisation Heures Creuses (affichage de « Départ par synchronisation Heures Creuses ») si cette fonctionnalité est disponible. Un appui supplémentaire sur la touche « + » sélectionne un départ différé de 15 minutes.
- (3) la sélection d'un départ différé de 15 minutes si la synchronisation Heures Creuses n'est pas disponible (mode dégradé).

Ensuite, chaque appui sur la touche « + » incrémente le départ différé de 15 minutes en 15 minutes jusqu'à un maximum de 12 heures. Inversement, chaque appui sur la touche « - » décrémente le départ différé de 15 minutes. Cette touche permet également de revenir à la sélection d'un départ par synchronisation Heures Creuses ou d'un départ instantané.

D'autres fonctionnalités sont remplies par l'appareil électrique 1 telles que la mise à jour de l'horloge 8 de l'appareil électrique 1 est automatique à partir des instants de réception des ordres de changement de tarif d'un code spécifique.

Le moyen d'exploitation donne la possibilité de choisir le type de codage.

Le moyen d'exploitation décode les signaux de codage ayant un protocole de communication différent.

Ce moyen d'exploitation peut aussi fonctionner sans horloge.

Dans un mode dégradé de l'invention, le procédé de démarrage d'un cycle d'un appareil électrique 1 ne comprend pas l'étape de comparaison des plages horaires pour chaque tarification.

Dans ce cas, le moyen d'exploitation 2 reçoit le signal de codage de chaque tarification contenu dans une unique trame. Cette trame est décodée par le moyen d'exploitation 2 et donne l'ordre de déclenchement du démarrage du cycle de l'appareil 1 par l'identification de la plage horaire commune à tous les codages où la tarification est la plus avantageuse.

La plage horaire commune est identifiée par le passage simultané de tous les codages de la trame dans un état spécifiant la tarification la plus avantageuse.

Bien entendu, de nombreuses modifications peuvent être apportées aux exemples de réalisation décrits ci-dessus sans sortir du cadre de l'invention, tel que défini par les revendications.

## Revendications

1. Procédé de démarrage d'un cycle d'un appareil électroménager (1) relié par un moyen de connexion (19) à un réseau électrique (20), ledit réseau électrique (20) proposant un abonnement avec des changements de tarification en fonction des plages horaires, ledit appareil électrique (1) comprenant un moyen d'exploitation (2) du signal de codage des tarifications en fonction des plages horaires sur un réseau électrique (20) et un moyen de commande (3) dudit appareil électroménager (1), **caractérisé en ce qu'**il comprend les étapes suivantes :
- réception du signal de codage de chaque tarification ;
- décodage du signal de codage de chaque tarification ;
- identification d'au moins une plage horaire commune à toutes les tarifications correspondant au tarif le plus avantageux pour déclancher le démarrage du cycle de l'appareil électrique (1) dans cette plage horaire.

2. Procédé de démarrage d'un cycle d'un appareil électroménager (1) relié par un moyen de connexion (19) à un réseau électrique (20) selon la revendication 1, **caractérisé en ce qu'**une étape supplémentaire de comparaison des plages horaires pour chaque tarification est placée entre l'étape de décodage du signal de codage de chaque tarification et l'étape d'identification d'au moins une plage horaire commune à toutes les tarifications.

3. Procédé de démarrage d'un cycle d'un appareil électroménager (1) relié par un moyen de connexion (19) à un réseau électrique (20) selon la revendication 1 ou 2, **caractérisé en ce que** ladite étape d'identification d'au moins une plage horaire commune à toutes les tarifications est suivie d'une étape de déclenchement de démarrage du cycle de l'appareil électrique (1) dans cette plage horaire.

4. Procédé de démarrage d'un cycle d'un appareil électroménager (1) relié par un moyen de connexion (19) à un réseau électrique (20) selon l'une quelconque des revendications 1 à 3, **caractérisé en ce que** la plage horaire commune est mise à disposition pour le démarrage du cycle suivant.

5. Procédé de démarrage d'un cycle d'un appareil électroménager (1) relié par un moyen de connexion (19) à un réseau électrique (20) selon la revendication 3 ou 4, **caractérisé en ce que** le démarrage du cycle est déclenché automatiquement.

6. Procédé de démarrage d'un cycle d'un appareil électroménager (1) relié par un moyen de connexion (19) à un réseau électrique (20) selon la revendication 3 ou 4, **caractérisé en ce qu'**un départ instantané est disponible avant la première étape de réception du signal de codage de chaque tarification.

7. Procédé de démarrage d'un cycle d'un appareil électroménager (1) relié par un moyen de connexion (19) à un réseau électrique (20) selon l'une quelconque des revendications 1 à 6, **caractérisé en ce qu'**un départ différé est disponible pendant les étapes de recherche et de sélection de la plage horaire commune à toutes les tarifications.

8. Procédé de démarrage d'un cycle d'un appareil électroménager (1) relié par un moyen de connexion (19) à un réseau électrique (20) selon l'une quelconque des revendications 1 à 7, **caractérisé en ce qu'**aucune plage horaire commune à toutes les tarifications est identifiée et le moyen d'exploitation (2) propose un départ différé du démarrage du cycle de l'appareil électrique (1).

9. Procédé de démarrage d'un cycle d'un appareil électroménager (1) relié par un moyen de connexion (19) à un réseau électrique (20) selon l'une quelconque des revendications 1 à 8, **caractérisé en ce que** la durée du départ différé est ajustable par pas d'incrémentation et de décrémentation.

10. Procédé de démarrage d'un cycle d'un appareil électroménager (1) relié par un moyen de connexion (19) à un réseau électrique (20) selon la revendication 9, **caractérisé en ce que** la durée maximale du départ différé n'est pas validée et la sélection du départ instantané est proposée.

11. Dispositif de démarrage d'un cycle d'un appareil électrique (1) adapté à mettre en oeuvre un procédé de démarrage d'un cycle d'un appareil électrique conforme à la revendication 1, **caractérisé en ce qu'**il comprend un moyen d'exploitation (2) pour décoder le signal de codage de chaque tarification et identifier au moins une plage horaire commune à toutes les tarifications correspondant au tarif le plus avantageux pour déclencher le démarrage du cycle de l'appareil électrique (1) dans cette plage horaire.

12. Dispositif de démarrage d'un cycle d'un appareil électrique (1) relié par un moyen de connexion (19) à un réseau (20) électrique selon la revendication 11, **caractérisé en ce que** le démarrage du cycle est déclenché automatiquement.

13. Dispositif de démarrage d'un cycle d'un appareil électrique (1) relié par un moyen de connexion (19) à un réseau électrique (20) selon la revendication 11, **caractérisé en ce que** la plage horaire commune est mise à disposition pour le démarrage du cycle suivant.

14. Dispositif de démarrage d'un cycle d'un appareil électrique (1) relié par un moyen de connexion (19) à un réseau électrique (20) selon la revendication 11, **caractérisé en ce que** le moyen d'exploitation (2) du signal de codage est intégré à l'appareil électrique (1).

15. Dispositif de démarrage d'un cycle d'un appareil électrique (1) relié par un moyen de connexion (19) à un réseau électrique (20) selon l'une quelconque des revendications 11 à 14, **caractérisé en ce que** le moyen d'exploitation (2) du signal de codage surveille en continu chaque signal de codage envoyé sur le réseau électrique (20).

16. Dispositif de démarrage d'un cycle d'un appareil électrique (1) relié par un moyen de connexion (19) à un réseau électrique (20) selon la revendication 15, **caractérisé en ce que** le moyen d'exploitation (2) du signal de codage vérifie le basculement pour chaque codage d'une tarification à au moins une autre dite tarification sur une période prédéterminée.

17. Dispositif de démarrage d'un cycle d'un appareil électrique (1) relié par un moyen de connexion (19) à un réseau électrique (20) selon la revendication 16, **caractérisé en ce que** le moyen d'exploitation (2) ne tient compte que des codages avec modification de tarification sur ladite période prédéterminée.

18. Dispositif de démarrage d'un cycle d'un appareil électrique (1) relié par un moyen de connexion (19) à un réseau électrique (20) selon la revendication 16 ou 17, **caractérisé en ce que** la période prédéterminée est de vingt cinq heures.

19. Dispositif de démarrage d'un cycle d'un appareil électrique (1) relié par un moyen de connexion (19) à un réseau électrique (20) selon l'une quelconque des revendications 16 à 18, **caractérisé en ce qu'**aucune plage horaire commune à toutes les tarifications est identifiée et le moyen d'exploitation (2) propose un départ différé du démarrage du cycle de l'appareil électrique (1).

20. Dispositif de démarrage d'un cycle d'un appareil électrique (1) relié par un moyen de connexion (19) à un réseau électrique (20) selon l'une quelconque des revendications 11 à 19, **caractérisé en ce que** la mise à jour de l'horloge (8) de l'appareil électrique (1) est automatique à partir des instants de réception des ordres de changement de tarif d'un code spécifique.

21. Dispositif de démarrage d'un cycle d'un appareil électrique (1) relié par un moyen de connexion (19) à un réseau électrique (20) selon l'une quelconque des revendications 11 à 20, **caractérisé en ce que** le moyen d'exploitation (2) donne la possibilité de choisir le type de codage.

22. Dispositif de démarrage d'un cycle d'un appareil électrique (1) relié par un moyen de connexion (19) à un réseau électrique (20) selon l'une quelconque des revendications 11 à 21, **caractérisé en ce que** le moyen d'exploitation (2) décode les signaux de codage ayant un protocole de communication différent.

23. Appareil électroménager **caractérisé en ce qu'**il est adapté à mettre en oeuvre le procédé de démarrage d'un cycle d'un appareil électrique selon l'une des revendications 1 à 10.

## Patentansprüche

1. Verfahren zum Starten eines Zyklus eines Haushaltsgeräts (1), welches über ein Anschlussmittel (19) an ein Stromversorgungsnetz (20) angeschlossen ist, wobei das besagte Stromversorgungsnetz (20) ein Abonnement mit unterschiedlichen, zeitzonenabhängigen Tarifierungen anbietet, wobei das besagte Elektrogerät (1) ein Mittel zur Auswertung (2) des Codiersignals der Tarifierungen in Abhängigkeit von den Zeitzonen auf einem Stromversorgungsnetz (20) und ein Mittel zur Steuerung (3) des besagten Haushaltsgeräts (1) umfasst, **dadurch gekennzeichnet, dass** es die folgenden Schritte umfasst:
- Empfangen des Codiersignals einer jeden Tarifierung;
- Decodieren des Codiersignals einer jeden Tarifierung;
- Identifizieren mindestens einer allen Tarifierungen gemeinsamen Zeitzone, welche dem günstigsten Tarif entspricht, um den Start des Zyklus des Elektrogeräts (1) in dieser Zeitzone auszulösen.

2. Verfahren zum Starten eines Zyklus eines Haushaltsgeräts (1), welches über ein Anschlussmittel (19) an ein Stromversorgungsnetz (20) angeschlossen ist, nach Anspruch 1, **dadurch gekennzeichnet, dass** zwischen dem Schritt des Decodierens des Codiersignals einer jeden Tarifierung und dem Schritt des Identifizierens mindestens einer allen Tarifierungen gemeinsamen Zeitzone ein zusätzlicher Schritt des Vergleichens der Zeitzonen für jede Tarifierung erfolgt.

3. Verfahren zum Starten eines Zyklus eines Haushaltsgeräts (1), welches über ein Anschlussmittel (19) an ein Stromversorgungsnetz (20) angeschlossen ist, nach Anspruch 1 oder 2, **dadurch gekennzeichnet, dass** auf den besagten Schritt des Identifizierens mindestens einer allen Tarifierungen gemeinsamen Zeitzone ein Schritt des Auslösens des Starts des Zyklus des Elektrogeräts (1) in dieser Zeitzone folgt.

4. Verfahren zum Starten eines Zyklus eines Haushaltsgeräts (1), welches über ein Anschlussmittel (19) an ein Stromversorgungsnetz (20) angeschlossen ist, nach einem beliebigen der Ansprüche 1 bis 3, **dadurch gekennzeichnet, dass** die gemeinsame Zeitzone für den Start des folgenden Zyklus zur Verfügung gestellt wird.

5. Verfahren zum Starten eines Zyklus eines Haushaltsgeräts (1), welches über ein Anschlussmittel (19) an ein Stromversorgungsnetz (20) angeschlossen ist, nach Anspruch 3 oder 4, **dadurch gekennzeichnet, dass** der Start des Zyklus automatisch ausgelöst wird.

6. Verfahren zum Starten eines Zyklus eines Haushaltsgeräts (1), welches über ein Anschlussmittel (19) an ein Stromversorgungsnetz (20) angeschlossen ist, nach Anspruch 3 oder 4, **dadurch gekennzeichnet, dass** vor dem ersten Schritt des Empfangens des Codiersignals einer jeden Tarifierung ein sofortiger Start zur Verfügung steht.

7. Verfahren zum Starten eines Zyklus eines Haushaltsgeräts (1), welches über ein Anschlussmittel (19) an ein Stromversorgungsnetz (20) angeschlossen ist, nach einem beliebigen der Ansprüche 1 bis 6, **dadurch gekennzeichnet, dass** während der Schritte des Suchens und des Auswählens der allen Tarifierungen gemeinsamen Zeitzone ein zeitverzögerter Beginn zur Verfügung steht.

8. Verfahren zum Starten eines Zyklus eines Haushaltsgeräts (1), welches über ein Anschlussmittel (19) an ein Stromversorgungsnetz (20) angeschlossen ist, nach einem beliebigen der Ansprüche 1 bis 7, **dadurch gekennzeichnet, dass** keine allen Tarifierungen gemeinsame Zeitzone identifiziert wird und das Mittel zum Auswerten (2) einen zeitverzögerten Beginn des Starts des Zyklus des Elektrogeräts (1) anbietet.

9. Verfahren zum Starten eines Zyklus eines Haushaltsgeräts (1), welches über ein Anschlussmittel (19) an ein Stromversorgungsnetz (20) angeschlossen ist, nach einem beliebigen der Ansprüche 1 bis 8, **dadurch gekennzeichnet, dass** die Dauer des zeitverzögerten Beginns in Inkrementierungs- und Dekrementierungsschritten einstellbar ist.

10. Verfahren zum Starten eines Zyklus eines Haushaltsgeräts (1), welches über ein Anschlussmittel (19) an ein Stromversorgungsnetz (20) angeschlossen ist, nach Anspruch 9, **dadurch gekennzeichnet, dass** die maximale Dauer des zeitverzögerten Beginns nicht validiert wird und die Auswahl des sofortigen Beginns angeboten wird.

11. Vorrichtung zum Starten eines Zyklus eines Elektrogeräts (1), welche dazu ausgelegt ist, ein Verfahren zum Starten eines Zyklus eines Elektrogeräts gemäß Anspruch 1 zu implementieren, **dadurch gekennzeichnet, dass** sie ein Mittel zum Auswerten (2) umfasst, um das Codiersignal einer jeden Tarifierungs zu decodieren und mindestens eine allen Tarifierungen gemeinsame Zeitzone, welche dem günstigsten Tarif entspricht, zu identifizieren, um den Start des Zyklus des Elektrogeräts (1) in dieser Zeitzone auszulösen.

12. Vorrichtung zum Starten eines Zyklus eines Elektrogeräts (1), welches über ein Anschlussmittel (19) an ein Stromversorgungsnetz (20) angeschlossen ist, nach Anspruch 11, **dadurch gekennzeichnet, dass** der Start des Zyklus automatisch ausgelöst wird.

13. Vorrichtung zum Starten eines Zyklus eines Elektrogeräts (1), welches über ein Anschlussmittel (19) an ein Stromversorgungsnetz (20) angeschlossen ist, nach Anspruch 11, **dadurch gekennzeichnet, dass** die gemeinsame Zeitzone für den Start des folgenden Zyklus zur Verfügung gestellt wird.

14. Vorrichtung zum Starten eines Zyklus eines Elektrogeräts (1), welches über ein Anschlussmittel (19) an ein Stromversorgungsnetz (20) angeschlossen ist, nach Anspruch 11, **dadurch gekennzeichnet, dass** das Mittel zum Auswerten (2) des Codiersignals im Elektrogerät (1) integriert ist.

15. Vorrichtung zum Starten eines Zyklus eines Elektrogeräts (1), welches über ein Anschlussmittel (19) an ein Stromversorgungsnetz (20) angeschlossen ist, nach einem beliebigen der Ansprüche 11 bis 14, **dadurch gekennzeichnet, dass** das Mittel zum Auswerten (2) des Codiersignals jedes auf dem Stromversorgungsnetz (20) gesendete Codiersignal fortlaufend überwacht.

16. Vorrichtung zum Starten eines Zyklus eines Elektrogeräts (1), welches über ein Anschlussmittel (19) an ein Stromversorgungsnetz (20) angeschlossen ist, nach Anspruch 15, **dadurch gekennzeichnet, dass** das Mittel zum Auswerten (2) des Codiersignals die Umschaltung für jede Codierung einer Tarifierung zu mindestens einer anderen besagten Tarifierung über einen vorbestimmten Zeitraum hinweg überprüft.

17. Vorrichtung zum Starten eines Zyklus eines Elektrogeräts ((1), welches über ein Anschlussmittel (19) an ein Stromversorgungsnetz (20) angeschlossen ist, nach Anspruch 16, **dadurch gekennzeichnet, dass** das Mittel zum Auswerten (2) lediglich die Codierungen mit unterschiedlichen Tarifierungen über den vorbestimmten Zeitraum hinweg berücksichtigt.

18. Vorrichtung zum Starten eines Zyklus eines Elektrogeräts (1), welches über ein Anschlussmittel (19) an ein Stromversorgungsnetz (20) angeschlossen ist, nach Anspruch 16 oder 17, **dadurch gekennzeichnet, dass** der vorbestimmte Zeitraum vierundzwanzig Stunden beträgt.

19. Vorrichtung zum Starten eines Zyklus eines Elektrogeräts (1), welches über ein Anschlussmittel (19) an ein Stromversorgungsnetz (20) angeschlossen ist, nach einem beliebigen der Ansprüche 16 bis 18, **dadurch gekennzeichnet**, das keine allen Tarifierungen gemeinsame Zeitzone identifiziert wird und das Mittel zum Auswerten (2) einen zeitverzögerten Beginn des Starts des Zyklus des Elektrogeräts (1) anbietet.

20. Vorrichtung zum Starten eines Zyklus eines Elektrogeräts (1), welches über ein Anschlussmittel (19) an ein Stromversorgungsnetz (20) angeschlossen ist, nach einem beliebigen der Ansprüche 11 bis 19, **dadurch gekennzeichnet, dass** die Aktualisierung des Zeitgebers (8) des Elektrogeräts (1) ausgehend von den Zeitpunkten des Empfangs der Befehle zur Tarifumschaltung eines spezifischen Codes automatisch erfolgt.

21. Vorrichtung zum Starten eines Zyklus eines Elektrogeräts (1), welches über ein Anschlussmittel (19) an ein Stromversorgungsnetz (20) angeschlossen ist, nach einem beliebigen der Ansprüche 11 bis 20, **dadurch gekennzeichnet, dass** das Mittel zum Auswerten (2) die Möglichkeit bietet, die Art der Codierung auszuwählen.

22. Vorrichtung zum Starten eines Zyklus eines Elektrogeräts (1), welches über ein Anschlussmittel (19) an ein Stromversorgungsnetz (20) angeschlossen ist, nach einem beliebigen der Ansprüche 11 bis 21, **dadurch gekennzeichnet, dass** das Mittel zum Auswerten (2) diejenigen Codiersignale, die ein unterschiedliches Kommunikationsprotokoll aufweisen, decodiert.

23. Haushaltsgerät, **dadurch gekennzeichnet, dass** es dazu ausgelegt ist, das Verfahren zum Starten eines Zyklus eines Elektrogeräts gemäß einem der Ansprüche 1 bis 10 zu implementieren.

## Claims

1. A method for starting a cycle of a household electrical appliance (1) connected by a means of connection (19) to an electrical network (20), said electrical network (20) offering a subscription with pricing that changes based on time periods, said electrical appliance (1) comprising a means of using (2) the time period-based pricing coding signal on an electrical network (20) and a means of controlling (3) said household electrical appliance (1), **characterized in that** it comprises the following steps:
- receiving the coding signal of each pricing;
- decoding the coding signal of each pricing;
- identifying at least one time period shared by all pricing rates corresponding to the most favourable pricing rate for triggering the start of the cycle of the electrical appliance (1) **in that** time period

2. A method for starting a cycle of a household electrical appliance (1) connected by a means of connection (19) to an electrical network (20) according to claim 1, **characterized in that** an additional step of comparing the time periods for each pricing is placed between the step of decoding the coding signal of each pricing and the step of identifying at least one time period shared by all pricing rates.

3. A method for starting a cycle of a household electrical appliance (1) connected by a means of connection (19) to an electrical network (20) according to claim 1 or 2, **characterized in that** said step of identifying at least one time period shared by all pricing rates is followed by a step of triggering the start of the cycle of the electrical appliance (1) during that time period.

4. A method for starting a cycle of a household electrical appliance (1) connected by a means of connection (19) to an electrical network (20) according to any one of the claims 1 to 3, **characterized in that** the shared time period is made available for the start of the following cycle.

5. A method for starting a cycle of a household electrical appliance (1) connected by a means of connection (19) to an electrical network (20) according to claim 3 or 4, **characterized in that** the start of the cycle is triggered automatically.

6. A method for starting a cycle of a household electrical appliance (1) connected by a means of connection (19) to an electrical network (20) according to claim 3 or 4, **characterized in that** an immediate start is available before the first step of receiving the coding signal of each pricing.

7. A method for starting a cycle of a household electrical appliance (1) connected by a means of connection (19) to an electrical network (20) according to any one of the claims 1 to 6, **characterized in that** a delayed start is available during the steps of searching for and selecting the time period shared by all pricing rates.

8. A method for starting a cycle of a household electrical appliance (1) connected by a means of connection (19) to an electrical network (20) according to any one of the claims 1 to 7, **characterized in that** no time period shared by all pricing rates is identified and the means of using (2) offer a delayed start of the starting of the cycle of the electrical appliance (1).

9. A method for starting a cycle of a household electrical appliance (1) connected by a means of connection (19) to an electrical network (20) according to any one of the claims 1 to 8, **characterized in that** the shared time period is adjustable in steps of incrementation and decrementation.

10. A method for starting a cycle of a household electrical appliance (1) connected by a means of connection (19) to an electrical network (20) according to claim 9, **characterized in that** the maximum duration of the delayed start is not confirmed and selecting of the immediate start is available.

11. A device for starting a cycle of a household electrical appliance (1) adapted to implement a method for starting a cycle of a household electrical appliance according to claim 1, **characterized in that** it comprises a means of using (2) for decoding coding signal of each pricing and identifying at least one time period shared by all pricing rates corresponding to the most favourable pricing rate for triggering the start of the cycle of the electrical appliance (1) within that time period.

12. A device for starting a cycle of an electrical appliance (1) connected by a means of connection (19) to an electrical network (20) according to claim 11, **characterized in that** the start of the cycle is triggered automatically.

13. A device for starting a cycle of an electrical appliance (1) connected by a means of connection (19) to an electrical network (20) according to claim 11, **characterized in that** the shared time period is made available for the start of the following cycle.

14. A device for starting a cycle of an electrical appliance (1) connected by a means of connection (19) to an electrical network (20) according to claim 11, **characterized in that** the means of using (2) the coding signal are integrated into the electrical appliance (1).

15. A device for starting a cycle of an electrical appliance (1) connected by a means of connection (19) to an electrical network (20) according to any of claims 11 to 14, **characterized in that** the means of using (2) the coding signal continuously monitors each coding signal sent over the electrical network (20).

16. A device for starting a cycle of an electrical appliance (1) connected by a means of connection (19) to an electrical network (20) according to claim 15, **characterized in that** the means of using (2) the coding signal verifies the switchover, for each coding, from one pricing to another said pricing for a predetermined length of time.

17. A device for starting a cycle of an electrical appliance (1) connected by a means of connection (19) to an electrical network (20) according to claim 16, **characterized in that** the means of using (2) only take into account codings with a pricing change over said predetermined period.

18. A device for starting a cycle of an electrical appliance (1) connected by a means of connection (19) to an electrical network (20) according to claim 16 or 17, **characterized in that** the predetermined period is twenty-five hours.

19. A device for starting a cycle of an electrical appliance (1) connected by a means of connection (19) to an electrical network (20) according to any one of the claims 16 to 18, **characterized in that** no time period shared by all pricing rates is identified and the means of using (2) offer a delayed start of the starting of the cycle of the electrical appliance (1).

20. A device for starting a cycle of an electrical appliance (1) connected by a means of connection (19) to an electrical network (20) according to any one of the claims 11 to 19, **characterized in that** the updating of the clock (8) of the electrical appliance (1) is automatic beginning from the moments when orders to change pricing rates with a specific code are received.

21. A device for starting a cycle of an electrical appliance (1) connected by a means of connection (19) to an electrical network (20) according to any one of the claims 11 to 20, **characterized in that** the means of using (2) give the option to choose the type of coding.

22. A device for starting a cycle of an electrical appliance (1) connected by a means of connection (19) to an electrical network (20) according to any one of the claims 11 to 21, **characterized in that** the means of using (2) decode the signals that have a different communication protocol.

23. A household electrical appliance **characterized in that** it is capable of implementing the method of starting an electrical appliance according to one of the claims 1 to 10.
